# EUROPÄISCHE PATENTSCHRIFT

(11) **EP 2 184 591 B1**
(45) Veröffentlichungstag und Bekanntmachung des Hinweises auf die Patenterteilung: **25.05.2016**
(21) Anmeldenummer: 08168401.1
(22) Anmeldetag: 05.11.2008
(51) Int. Cl.: G01F 23/00

(54) **Sensor mit Speicher aufweisenden Baugruppen**
Sensor comprising memory-equipped modules
Redondance modulaire triple efficace sur un anneau tressé

(43) Veröffentlichungstag der Anmeldung: 12.05.2010
(73) Patentinhaber: VEGA Grieshaber KG, 77709 Wolfach (DE)
(72) Erfinder: Gaiser, Martin, 72275, Alpirsbach (DE); Haas, Jürgen, 77709, Oberwolfach (DE); Motzer, Jürgen, 77723, Gengenbach (DE)
(74) Vertreter: Maiwald Patentanwalts GmbH

(56) Entgegenhaltungen:
- WO-A-2007/027342
- US-A- 5 586 085
- US-A1- 2005 275 527
- US-A1- 2006 179 251
- US-A1- 2006 267 756
- US-B1- 6 314 023
- US-B1- 6 437 692
- US-B1- 7 184 924

## Beschreibung

### Gebiet der Erfindung

Die Erfindung betrifft einen Sensor, insbesondere einen Füllstandsensor, und ein Verfahren zur Herstellung eines Sensors.

### Technologischer Hintergrund

Sensoren im Sinne dieser Anmeldung können jede Art von Messgeräten sein, beispielsweise Füllstandsensoren, Drucksensoren, Grenzstandsensoren oder Temperatursensoren, um nur einige Beispiele zu nennen. Zur Erfassung können dabei unterschiedliche physikalische Effekte ausgenutzt werden. Die Messwerterfassung kann mit Hilfe von Radarwellen, Ultraschall, Vibration, geführter Mikrowelle (TDR, Time Domain Reflexion) oder kapazitiver Effekte erfolgen.

Bekannte Füllstandsensoren für eine berührungslose Messung weisen eine Antenne auf, welche Signale unter Ausnutzung der genannten Effekte sendet bzw. empfängt, um den Füllstand eines Mediums, z.B. in einem Füllgutbehälter, zu ermitteln. Die Antenne eines solchen Füllstandsensors ist dabei beispielsweise innerhalb des Behälters oberhalb des Mediums angeordnet.

Elektronikmodule solcher Sensoren bestehen im Allgemeinen aus mehreren elektronischen Baugruppen. Diese Baugruppen werden oftmals in identischer Form in verschiedene Sensoren verbaut, so dass sich je nach Zusammenstellung der Baugruppen unterschiedliche Sensoren oder Sensoren mit unterschiedlichen Eigenschaften ergeben. Die elektronischen Baugruppen durchlaufen separat die notwendigen Fertigungs- und Prüfschritte und werden erst bei der Komplettierung des Elektronikmoduls zusammengebaut. Eine Identifizierung der verschiedenen elektronischen Baugruppen ist dabei nur optisch möglich, so dass die Gefahr besteht, dass die falschen Baugruppen zu einem Elektronikmodul zusammengebaut werden. Eine derartige falsche Zusammensetzung kann bisher nur anhand abschließender Funktionstests der Elektronikmodule festgestellt werden, was zeitaufwendig ist und zusätzliche Arbeitsschritte erforderlich macht. Darüber hinaus ist ferner die Möglichkeit denkbar, dass eine elektronische Baugruppe verbaut wird, die nicht sämtliche Prüfschritte durchlaufen hat. Ferner kann das Verbauen baugleicher Baugruppen in verschiedene Sensoren eine Anpassung und Abstimmung erforderlich machen, was wiederum einen zusätzlichen Arbeitsschritt erfordert und einen höheren Herstellungsaufwand mit sich bringt.

Die WO 2007/027342 beschreibt ein Verfahren und eine Vorrichtung zur Erfassung von Wasserleckagen. Die offenbarte Vorrichtung umfasst eine Vielzahl an Sensoreinheiten, die wiederum eine Vielzahl an Sensoren umfassen. Die Sensoreinheiten kommunizieren mit einem Computer, wobei die Sensoreinheit betreffende Status- oder Selbstdiagnoseinformationen oder ID-Codes von der Sensoreinheit ausgegeben werden.

WO 2007/027342 A1 beschreibt ein Verfahren und eine Vorrichtung zur Detektion von Wasserlecks in einem Gebäude. Hierfür werden mehrere Sensoren verwendet, welche ihre Messdaten kabellos an einen Rechner übertragen können.

US 6,314,023 B1 beschreibt eine integrierte Schaltung.

### Zusammenfassung der Erfindung

Der Erfindung liegt die Aufgabe zugrunde, die geschilderten Probleme des Standes der Technik zu verbessern und insbesondere die Zusammenstellung einzelner elektronischer Baugruppen in einem Sensor sicherzustellen und zu vereinfachen.

Diese Aufgabe wird mit einem Sensor und einem Verfahren zur Herstellung eines Sensors gemäß der unabhängigen Ansprüche gelöst.

Vorteilhafte Weiterentwicklungen der Erfindung sind Gegenstand der abhängigen Ansprüche.

Die beschriebenen Ausführungsbeispiele betreffen gleichermaßen den Sensor und das Verfahren zur Herstellung des Sensors, so dass sich die im Hinblick auf den Sensor beschriebenen Ausführungsbeispiele auch im Verfahren implementieren lassen und umgekehrt. Außerdem lassen sich die im Zusammenhang mit dem Sensor beschriebenen Vorteile gleichermaßen mit dem Verfahren zum Herstellen des Sensors erzielen.

Die Erfindung baut auf dem gattungsgemäßen Stand der Technik auf, durch einen Sensor mit einem Elektronikmodul, welches mehrere elektronische Baugruppen umfasst, und mit einem Prozessor, der mit den elektronischen Baugruppen elektrisch koppelbar ist, wobei die Baugruppen jeweils einen programmierbaren Speicher mit baugruppenspezifischen Daten der jeweiligen Baugruppe aufweisen, deren Speicherinhalt von dem Prozessor ausles- und auswertbar ist. Dies bringt den Vorteil mit sich, dass die Speicher der Baugruppen nach oder während der Fertigung und/oder nach oder während der anschließenden Funktionsprüfung der Baugruppen mit Daten programmiert werden können, welche die individuelle Baugruppe betreffen. Dadurch können dem Prozessor spezifische die einzelne Baugruppe betreffende Informationen mitgeteilt werden, welche dieser wiederum für einen verbesserten Betrieb und eine verbesserte Abstimmung des Informationsaustausches und des Zusammenwirkens zwischen ihm selbst und der entsprechenden Baugruppe sowie zwischen den Baugruppen untereinander verwenden kann. Die beispielsweise durch eine Funktionsprüfung der Baugruppe gewonnenen Ergebnisse werden somit nicht wieder verworfen, sondern können als Basis für die Abstimmung des Betriebs des Elektronikmoduls bzw. des Sensors dienen. Dies eröffnet eine Vielzahl von Möglichkeiten und damit verbundenen Vorteilen. Beispielsweise kann dadurch nach dem Zusammenbau der Baugruppen durch den Prozessor überprüft werden, ob die Zusammenstellung korrekt, d.h. mit den richtigen Baugruppen, erfolgt ist. Ferner kann dadurch durch den Prozessor eine Konfiguration des Elektronikmoduls in

Abhängigkeit der Zusammenstellung oder eine Kalibrierung in Abhängigkeit der Prüfergebnisse erfolgen. Darüber hinaus kann der Prozessor nach der Zusammenstellung überprüfen, ob die jeweilige Baugruppe alle Tests erfolgreich durchlaufen hat, um sicherzustellen, dass nur Baugruppen in den Vertrieb gelangen, die vollumfänglich geprüft wurden.

Ferner kann vorteilhafterweise vorgesehen sein, dass die Speicher nicht-flüchtige Speicher, insbesondere serielle EEPROMs mit einer Ein-Draht-Schnittstelle, sind. Durch die Verwendung nicht-flüchtiger Speicher bleibt der Dateninhalt nach der Fertigung und Prüfung der Baugruppen dauerhaft in den Speichern dieser Baugruppen erhalten - auch nach Ausbau einer Baugruppe und Verwendung dieser Baugruppe in einem anderen Elektronikmodul. Vorteilhafterweise kommen hierfür die genannten EEPROMs zum Einsatz, die den Vorteil bieten, dass diese keinen separaten Spannungsanschluss erfordern, sondern ihre Energie über die Datenleitung beziehen. Dadurch können entsprechende Zuleitungen eingespart werden.

Außerdem kann die Erfindung dadurch weitergebildet sein, dass die Daten einen Identifikationscode zur Bestimmung der Baugruppe und/oder des Herstellers umfassen. Dieser Identifikationscode ermöglicht neben der automatischen Überprüfung der Richtigkeit der Zusammenstellung durch den Prozessor und der Selbstkonfiguration des Elektronikmoduls auch eine Abfrage des Herstellers durch den Prozessor. Somit kann der Identifikationscode auch als eindeutiges Erkennungsmerkmal dienen mit dem ein Schutz vor Nachbau und Kopieren realisiert werden kann, da der Prozessor nicht von einem bestimmten Hersteller gefertigte Baugruppen nicht akzeptiert oder an den Benutzer oder Hersteller (z.B. im Rahmen von Reparaturarbeiten) meldet.

Insbesondere ist dabei vorgesehen, dass der Identifikationscode eine Seriennummer ist. Eine solche individuelle Seriennummer wird vom Hersteller der Baugruppe nur einmal vergeben und ist dieser eindeutig zugeordnet. Beim Bezug solcher Bauteile kann der Seriennummernbereich dem Kunden mitgeteilt werden. Diese Bauteilseriennummer kann in die Überwachung bei der Konfiguration des Elektronikmoduls und beim späteren Betrieb des Sensors einbezogen werden. Genauer bedeutet dies, dass der Sensor beim Einschalten diese Seriennummer kontrollieren wird. Liegt sie nicht im von der Software erwarteten Bereich bzw. hat sie nicht den von der Software erwarteten Wert, dann wird der Sensor keinen ordnungsgemäßen Betrieb aufnehmen. Dadurch lassen sich die eben genannten Vorteile bezüglich Selbstkonfiguration des Elektronikmoduls, Überprüfung der Zusammenstellung und Kopierschutz noch besser realisieren.

Eine weitere Ausführungsform kann dadurch realisiert werden, dass die Daten durch Funktionsprüfung der Baugruppe ermittelte Prüfdaten umfassen. Dies bringt den Vorteil mit sich, dass eine Kalibrierung abhängig von Prüfergebnissen ermöglicht wird. Dies hat den Vorteil, dass die Anpassung der Baugruppe an die anderen Baugruppen bzw. das Elektronikmodul nicht nur auf die Art der jeweiligen Baugruppe, sondern auf die individuelle Baugruppe abgestimmt werden kann, so dass sogar Aspekte wie beispielsweise Fertigungstoleranzen und Fehlerkorrektur möglich sind. Erfindungsgemäß ist somit nunmehr möglich, Test- bzw. Prüfergebnisse und damit verbundene Abgleichwerte der einzelnen Baugruppen in das fertiggestellte Elektronikmodul zu übernehmen, so dass die Abstimmung der einzelnen Baugruppen automatisch durch den Prozessor erfolgen kann und eine manuelle Abstimmung in einem weiteren Arbeitsschritt entfallen kann.

In diesem Zusammenhang ist dabei besonders vorteilhaft, dass die Prüfdaten durch Prüfung ermittelte Messwerte oder Fertigungsabweichungen der Baugruppen umfassen.

Vorteilhafterweise ist bei der Erfindung vorgesehen, dass die Daten mit vom Prozessor erwarteten Daten verifizierbar sind, um die Richtigkeit einer Zusammenstellung der Baugruppen zu überprüfen. Dies hat den Vorteil, dass falsche Zusammenstellungen der Baugruppen seitens des Prozessors überprüft und automatisch erkannt werden können. Dazu überprüft der Prozessor, ob die tatsächliche Baugruppenzusammenstellung einer für den gewünschten Sensor vorgesehenen Zusammenstellung entspricht. Als Daten zur Identifikation der Baugruppe kommen beispielsweise ein Identifikationscode oder eine Seriennummer in Frage. Mit diesen Daten unterzieht sich das Elektronikmodul nach der Zusammenstellung selbständig einer Verifizierung der Richtigkeit der Zusammenstellung, so dass ein abschließender dahingehender Funktionstest entfallen kann.

Ferner kann vorteilhafterweise vorgesehen sein, dass der Betrieb des Elektronikmoduls in Abhängigkeit der Daten konfigurierbar ist. Dabei erkennt der Prozessor beispielsweise anhand des Identifikationscodes oder der Seriennummer, um welche Baugruppe es sich handelt und nimmt anhand dieser Erkenntnis entsprechende Einstellungen des Elektronikmoduls vor. Der Prozessor konfiguriert die Abstimmung der einzelnen Baugruppen untereinander und konfiguriert das Zusammenwirken zwischen ihm und der jeweiligen Baugruppe. Bei der Konfiguration erfolgt mittels der oben genannten Möglichkeiten eine Identifikation der Art der Baugruppe und seitens des Prozessors eine Auswahl der Kommunikationsweise zwischen Prozessor und der entsprechenden Baugruppe sowie eventuell der Baugruppen untereinander. Außerdem kann der Prozessor anhand der Identifikation der Baugruppe gegebenenfalls eine Einstellung dieser oder der anderen Baugruppen vornehmen. Das heißt es steht eine Auswahl an verschiedenen Kommunikationsweisen und Einstellungen zur Verfügung aus der abhängig von der Identifikation der Baugruppe vom Prozessor ausgewählt wird. Eine weitere vorteilhafte Weiterentwicklung der Erfindung besteht darin, dass der Betrieb des Elektronikmoduls in Abhängigkeit der Daten kalibrierbar ist. Hierbei sind die Daten vorzugsweise Fertigungs- bzw. Prüfdaten. Im Unterschied zur Konfiguration erfolgt nicht lediglich die Zuordnung zu einer vorgegebenen zahlenmäßig begrenzten Kommunikationsweise oder einem Einstellungssatz, sondern es erfolgt eine völlig individuelle Anpassung an die abgespeicherten Prüfergebnisse der Baugruppe. Dies beinhaltet Aspekte wie beispielsweise den Ausgleich von Fertigungstoleranzen oder eine Fehlerkorrektur, was die Funktionsgenauigkeit des fertiggestellten Elektronikmoduls erhöht. Wie oben bereits erwähnt, ist somit nunmehr möglich, Test- bzw. Prüfergebnisse und damit verbundene Abgleichwerte der einzelnen Baugruppen in das fertiggestellte Elektronikmodul zu übernehmen, so dass die Abstimmung der einzelnen Baugruppen automatisch durch den Prozessor erfolgen und eine manuelle Abstimmung in einem weiteren Arbeitsschritt entfallen kann.

Im Folgenden wird mit Verweis auf die Figuren ein Ausführungsbeispiel der Erfindung beschrieben.

### Kurze Figurenbeschreibung

- Fig. 1: zeigt schematisch einen Aufbau eines Elektronikmoduls für einen Füllstandsensor gemäß einem Ausführungsbeispiel der Erfindung;
- Fig. 2: zeigt das erfindungsgemäße Verfahren zur Herstellung eines Sensors, und
- Fig. 3: zeigt den Füllstandsensor gemäß dem erfindungsgemäßen Ausführungsbeispiel.

### Detaillierte Beschreibung eines Ausführungsbeispiels

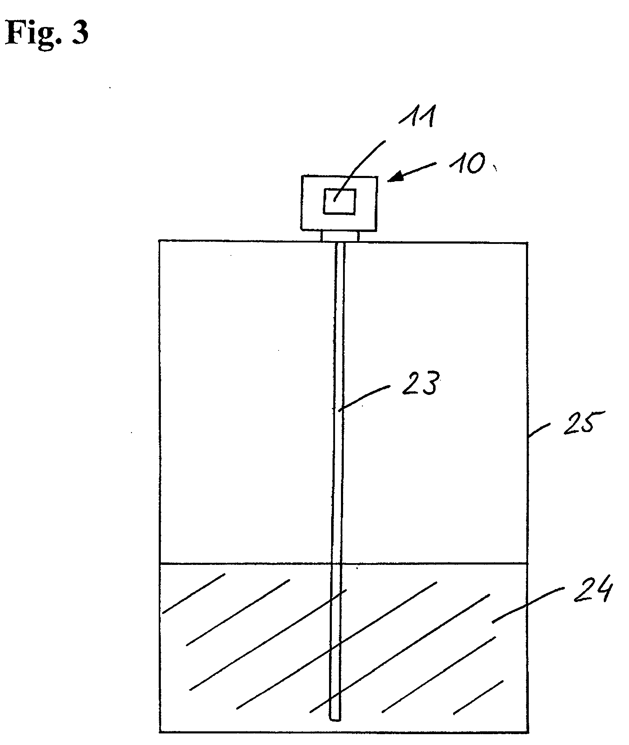

Figur 3 zeigt einen Füllstandsensor 10 gemäß einem Ausführungsbeispiel der Erfindung. In dem Füllstandsensor 10 ist ein Elektronikmodul 11 verbaut ist. Ferner weist der Sensor 10 eine Antenne 23 auf, die innerhalb eines Behälters 25 in das zu messende Füllgut 24 ragend angeordnet ist.

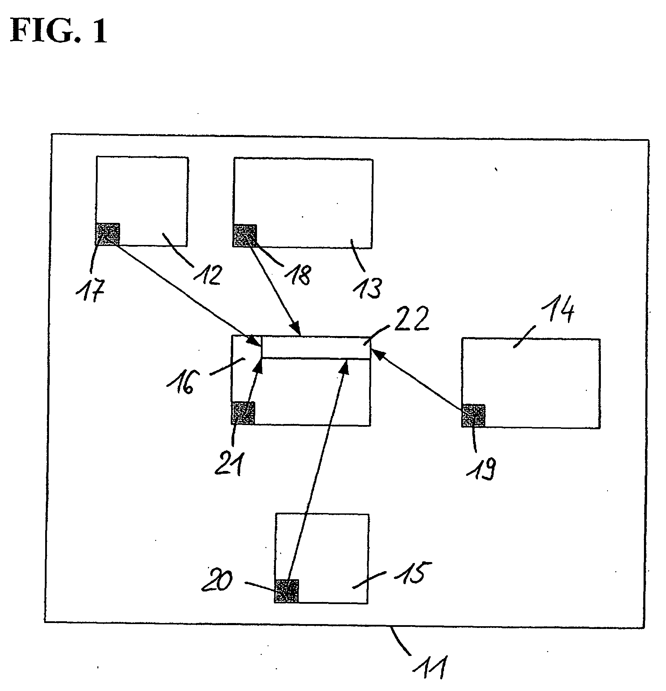

Figur 1 zeigt schematisch einen Aufbau des Elektronikmoduls 11 für den Füllstandsensor 10 gemäß einem Ausführungsbeispiel der Erfindung. Dieses Elektronikmodul 11 umfasst eine Mikrowellenbaugruppe 12, eine Frequenzsteuerungsbaugruppe 13, eine Netzteilbaugruppe 14 zur Stromversorgung des Elektronikmoduls 11 und des Füllstandsensors 10, eine Schnittstellenbaugruppe 15 sowie eine Detektorbaugruppe 16. Die einzelnen Baugruppen 12 - 16 weisen jeweils einen Speicher 17 - 21 auf. Als jeweilige Speicher 17 - 21 werden nicht-flüchtige Speicher verwendet, die elektrisch programmierbar sind und unabhängig von einer Stromversorgung die gespeicherten Daten behalten. Vorzugsweise werden serielle EEPROMs mit einer Ein-Draht-Schnittstelle verwendet. Diese EEPROMs benötigen neben einer Erdung nur eine einzige Datenleitung von der sie auch ihre Energie beziehen können.

Ferner weist die Detektorbaugruppe 16 einen Mikroprozessor 22 auf, der mit den einzelnen Speichern 17 - 21 elektrisch verbindbar ist. Außerdem können die Elektronikbaugruppen 12 bis 15 zusätzlich noch für spezielle Aufgaben zugeschnittene Mikroprozessoren beinhalten.

Die einzelnen Baugruppen 12 - 16 werden in identischer Form in mehrere Geräte, entsprechend einem Baukastenprinzip, verbaut. Dabei durchlaufen die Baugruppen entsprechende Fertigungs- und Prüfschritte. Nach dem Durchlaufen der Fertigungsschritte werden fertigungsrelevante Daten wie beispielsweise ein Identifikationscode, insbesondere eine Seriennummer, in dem jeweiligen Speicher 17 - 21 der Baugruppen 12 - 16 abgespeichert. Der Identifikationscode kann einerseits einen Rückschluss auf die Art der Baugruppe geben und andererseits eine eindeutige Herstellerzuordnung sicherstellen.

Als Prüfschritte sind in diesem Zusammenhang Tests wie ein Automatisch Optischer Inspektionstest (AOI), ein Test zur Sicherstellung der Explosionsschutzrichtlinien (IC-Test) oder Funktionstests, insbesondere hinsichtlich Fehlerdiagnose und/oder Messwert- bzw. Fertigungsabweichungen, denkbar. Hinsichtlich der Messwert- bzw. Fertigungsabweichungen werden die Abweichungen von gewünschten Sollausgabewerten der Baugruppen bei einem bestimmten Eingangswert oder bei einer bestimmten Messgröße verstanden. Nach oder während einem erfolgreichen Durchlaufen dieser Prüfschritte wird dies im jeweiligen Speicher 17 - 21 der Baugruppen 12 - 16 hinterlegt, ebenso werden angefallene, relevante Prüfdaten abgespeichert. Dieses Speichern kann durch das ohnehin für diese Zwecke mit der Baugruppe verbundene Prüfgerät erfolgen.

Ein Beispiel für einen möglichen Dateninhalt, wie er in den Speichern 12 - 16 abgelegt werden kann, ist in Tabelle 1 gegeben. Der in diesem Beispiel verwendete Speicherbaustein hat eine Speicherkapazität von 128 Byte und durchläuft vier Prüfschritte. Im Übrigen ist die Tabelle 1 von sich aus selbsterklärend.

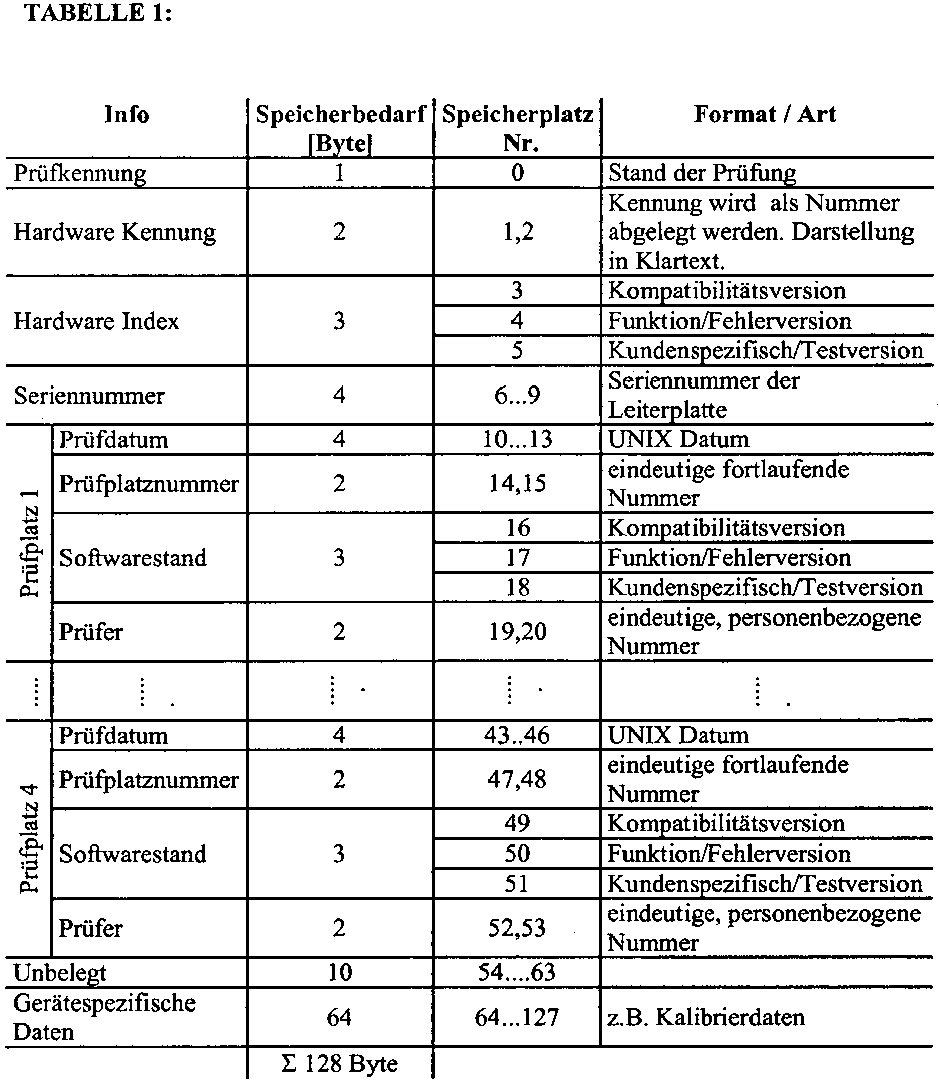

Nach dem Durchlaufen sämtlicher Fertigungs- und Prüfschritte werden die einzelnen Baugruppen 12 - 16 zu einem Elektronikmodul 11 mittels elektrischer Steckverbindungen oder mittels nicht mehr lösbarer, elektrisch leitender Verbindungsmittel (z.B. Lötverbindung) zusammengebaut.

Nach dem Zusammenbau der Baugruppen 12 - 16 zu dem Elektronikmodul 11 ist der Mikroprozessor 22 mit den Speichern 17 - 21 elektrisch verbunden. Bei einer dem Zusammenbau des Elektronikmoduls 11 folgenden Erstinbetriebnahme werden die einzelnen Speicher 17 - 21 vom Mikroprozessor 22 ausgelesen.

Anhand dieser ausgelesenen Daten kann der Mikroprozessor 22 eine Konfiguration, eine Verifikation und/oder eine Kalibrierung der einzelnen Baugruppen, des Elektronikmoduls und somit des Sensors durchführen.

Bei der Konfiguration kann der Mikroprozessor 22 die korrekte Zusammenstellung nach den Vorgaben des Fertigungsauftrages überprüfen. Dazu kann die Baugruppe 12 - 16 anhand von Fertigungsdaten (z.B. einem Identifikationscode oder einer Seriennummer) oder anhand von durch Funktionsprüfung der Baugruppen ermittelten Prüfdaten erkannt werden, indem der Dateninhalt des jeweiligen Speichers 17 - 21 mit dem aufgrund des Fertigungsauftrages oder aufgrund der Baureihe des Mikroprozessors vom Mikroprozessor erwarteten Dateninhalt verglichen wird. Darüber hinaus kann der Mikroprozessor 22 das Elektronikmodul 11 und somit auch den Füllstandsensor 10 selbständig konfigurieren. Beispielsweise benötigen unterschiedliche Frequenzen der Antenne 23 (unterschiedliche Radar-, Mikrowellen- oder Ultraschallfrequenzen) oder der Mikrowellenbaugruppe 12 unterschiedliche Einstellungen eines Analog-Digitalwandlers bei der Signalverarbeitung der Detektorbaugruppe 16, wobei die Einstellungen der einzelnen Baugruppen 12 - 16 eigenständig koordiniert durch den Mikroprozessor 22 vorgenommen werden können.

Bei der Verifikation werden die Prüfdaten aus den jeweiligen Speichern 17 - 21 dahingehend ausgewertet, ob alle Tests erfolgreich durchlaufen wurden und dass keine Baugruppen zur Auslieferung kommen, die nicht alle Tests erfolgreich durchlaufen haben. Dazu wird mittels des ausgelesenen Speicherinhalts der Stand der Prüfungen bewertet.

Bei der Kalibrierung werden Prüfdaten, wie beispielsweise Abgleichwerte, die individuell baugruppenbezogen sind, für den Betrieb des Elektronikmoduls 11 übernommen. So werden beispielsweise die Kalibrierdaten einer D/A-Wandleransteuerung zur Generierung des Stromausgangspegels der Netzteilbaugruppe 14 in der Funktionsprüfung der Netzteilbaugruppe 14 erfasst und als Prüfdaten im Speicher 19 der Netzteilbaugruppe 14 hinterlegt. Diese erfassten Kalibrierdaten können dann vom Mikroprozessor 22 nach dem Zusammenbau des Elektronikmoduls zur Ansteuerung der Netzteilbaugruppe 14 verwendet werden, so dass der Füllstandsensor den geforderten Stromausgangspegel aufweist. Bisher erforderte dies eine manuelle Kalibrierung des Stromausgangs am Endabgleichplatz der Füllstandsensoren.

Eine weitere Funktion, die sich durch die Hinterlegung der Fertigungs- und/oder Prüfdaten realisieren lässt ist ein Kopierschutz bzw. Herstellernachweis. Dabei umfasst der Speicherinhalt der Speicher 17 - 21 einen Identifikationscode oder eine eindeutige Seriennummer, wobei beim Vertrieb der Bauteile dem Abnehmer der Seriennummernbereich jeder Lieferung mitgeteilt wird. Diese Seriennummer kann im Komplettgerät ausgelesen werden und somit als Nachweis dienen, dass das Elektronikmodul wirklich von einem bestimmten Hersteller stammt.

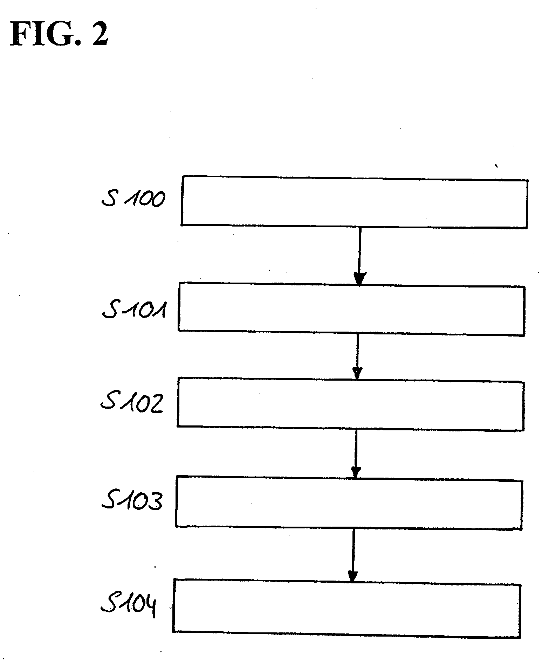

Figur 2 zeigt das erfindungsgemäße Verfahren zur Herstellung eines Sensors. Bei diesem Verfahren werden in Schritt S100 baugruppenspezifische Daten mehrerer elektronischer Baugruppen 12 - 16 ermittelt. Anschließend werden in Schritt S101 Baugruppen 12 - 16 mit einem Prozessor 22 erfolgt. Bei einer Erstinbetriebnahme werden die so für den Prozessor 22 zugänglichen Daten in Schritt S103 ausgelesen und in einem anschließenden Schritt S104 ausgewertet.

## Patentansprüche

1. Füllstandsensor, Drucksensor, Grenzstandsensor oder Temperatursensor (10), aufweisend:
ein Elektronikmodul (11), welches mehrere elektronische Baugruppen (12 - 16) umfasst;
einen Prozessor (22), der mit den elektronischen Baugruppen (12 - 16) elektrisch gekoppelt ist,
wobei die Baugruppen (12 - 16) jeweils einen programmierbaren Speicher (17 - 21) mit baugruppenspezifischen Daten der jeweiligen Baugruppe (12 - 16) aufweisen, deren Speicherinhalt von dem Prozessor (22) ausles- und auswertbar ist;
wobei der Prozessor ausgeführt ist, nach der Zusammenstellung der Baugruppen anhand der Daten die Richtigkeit der Zusammenstellung der Baugruppen zu überprüfen;
wobei der Prozessor ausgeführt ist, anhand der Daten zu überprüfen, ob die jeweiligen Baugruppen alle vorgesehenen Tests durchlaufen haben;
wobei die Daten Informationen über die Art von an der Baugruppe (12 - 16) durchgeführten Funktionsprüfungen umfassen, und
die Daten mit vom Prozessor (22) erwarteten Daten verifizierbar sind, um die Vollständigkeit der Funktionsprüfungen der Baugruppen (12 - 16) zu überprüfen.

2. Sensor (10) gemäß Anspruch 1, wobei
die Speicher (17 - 21) nicht-flüchtige Speicher, insbesondere serielle EEPROMs mit einer Ein-Draht-Schnittstelle, sind.

3. Sensor (10) gemäß einem der vorhergehenden Ansprüche, wobei
die Daten einen Identifikationscode zur Bestimmung der Baugruppe (12 - 16) und/oder des Herstellers umfassen.

4. Sensor (10) gemäß Anspruch 3, wobei
der Identifikationscode eine Seriennummer ist.

5. Sensor (10) gemäß einem der vorhergehenden Ansprüche, wobei
die Daten durch Funktionsprüfung der Baugruppe (12 - 16) ermittelte Prüfdaten umfassen.

6. Sensor (10) gemäß Anspruch 5, wobei
die Prüfdaten durch Prüfung ermittelte Messwerte der Baugruppe (12 - 16) umfassen.

7. Sensor (10) gemäß Anspruch 5, wobei
die Prüfdaten durch Prüfung ermittelte Fertigungsabweichungen der Baugruppe (12 - 16) umfassen.

8. Sensor (10) gemäß einem der vorhergehenden Ansprüche, wobei
der Betrieb des Elektronikmoduls (11) in Abhängigkeit der Daten konfigurierbar ist.

9. Sensor (10) gemäß einem der vorhergehenden Ansprüche, wobei
der Betrieb des Elektronikmoduls (11) in Abhängigkeit der Daten kalibrierbar ist.

10. Sensor (10) gemäß einem der vorhergehenden Ansprüche, wobei
für die Baugruppen (12 - 16) ein oder mehrere Elemente der Gruppe bestehend aus: einer Mikrowellenbaugruppe (12), einer Schnittstellenbaugruppe (15), einer Netzteilbaugruppe (14), einer Detektorbaugruppe (16) und einer Frequenzsteuerungsbaugruppe (13) vorgesehen sind.

11. Verfahren zur Herstellung eines Füllstandsensors, Drucksensors, Grenzstandsensors oder Temperatursensors (10), mit den Schritten:
Ermitteln (S100) von baugruppenspezifischen Daten mehrerer elektronischer Baugruppen (12 - 16);
Speichern (S101) der baugruppenspezifischen Daten in jeweilige Speicher (17 - 21) der Baugruppen (12 - 16);
Zusammenstellen (S102) der Baugruppen (12 - 16) in einem Elektronikmodul (11);
Elektrisches Koppeln der elektronischen Baugruppen (12 - 16) mit einem Prozessor (22);
Auslesen (S103) der Daten aus den Speichern (17 - 21) durch den Prozessor (22), und
Auswerten (S104) der Speicherinhalte durch den Prozessor (22);
Überprüfen anhand der Daten aus den Speichern nach der Zusammenstellung der Baugruppen, ob die Zusammenstellung der Baugruppen korrekt ist und/oder ob die jeweiligen Baugruppen alle vorgesehenen Test durchlaufen haben;
wobei die Daten Informationen über die Art von an der Baugruppe (12 - 16) durchgeführten Funktionsprüfungen umfassen, und
die Daten mit vom Prozessor (22) erwarteten Daten verifizierbar sind, um die Vollständigkeit der Funktionsprüfungen der Baugruppen (12 - 16) zu überprüfen.

12. Verfahren gemäß Anspruch 11, des Weiteren mit dem Schritt:
Konfigurieren und/oder Kalibrieren des Betriebs des Elektronikmoduls (11) in Abhängigkeit der Daten.

## Claims

1. A fill level sensor, a pressure sensor, a point level sensor or a temperature sensor (10) comprising:
an electronic module (11) that comprises several electronic subassemblies (12-16);
a processor (22) that is electrically coupled to the electronic subassemblies (12-16),
wherein the subassemblies (12-16) respectively comprise a programmable storage device (17-21) with subassembly-specific data of the respective subassembly (12-16), wherein the storage device content can be read out and evaluated by the processor (22),
wherein the processor is configured for checking the correctness of the assembly of the subassemblies after the assembly of the subassemblies based on the data;
wherein the processor is configured for checking whether the subassemblies have run through all provided tests based on the data;
wherein the data comprises information about the type of functional checks performed on the subassembly (12-16), and
the data can be verified with data expected by the processor (22) in order to check the completeness of the functional tests of the subassemblies (12-16).

2. The sensor (10) of claim 1, wherein
the storage devices (17-21) are non-volatile storage devices, particularly serial EEPROMs with a single-wire interface.

3. The sensor (10) of one of the preceding claims, wherein the data
comprises an identification code for determining the subassembly (12-16) and/or the manufacturer.

4. The sensor (10) of claim 3, wherein
the identification code is a serial number.

5. The sensor (10) of one of the preceding claims, wherein the data
comprises test data determined by means of functional tests of the subassembly (12-16).

6. The sensor (10) of claim 5, wherein
the test data comprises measured values of the subassembly (12-16) that were determined by means of tests.

7. The sensor (10) according to claim 5, wherein
the test data comprises manufacturing irregularities of the subassembly (12-16) that were determined by means of tests.

8. The sensor (10) of one of the preceding claims, wherein the operation of the electronic module (11) can be configured in dependence on the data.

9. The sensor (10) of one of the preceding claims, wherein the operation of the electronic module (11) can be calibrated in dependence on the data.

10. The sensor (10) of one of the preceding claims, wherein one or more elements of the group consisting of: a microwave subassembly (12), an interface subassembly (15), a power supply subassembly (14), a detector subassembly (16) and a frequency control subassembly (13) are provided for the subassemblies (12-16).

11. A method for manufacturing a fill level sensor, a pressure sensor, a point level sensor or a temperature sensor (10) with the steps:
determining (S100) subassembly-specific data of several electronic subassemblies (12-16);
storing (S101) the subassembly-specific data in respective storage devices (17-21) of the subassemblies (12-16);
assembling (S102) the subassemblies (12-16) into an electronic module (11);
electrically coupling the electronic subassemblies (12-16) to a processor (22);
reading out (S103) the data from the storage devices (17-21) by means of the processor (22),
evaluating (S104) the storage device contents by means of the processor (22);
checking based on the data from the storage devices after the assembly of the subassemblies whether the assembly of the subassemblies is correct and/or whether the respective subassemblies have run through all provided tests;
wherein the data comprises information about the type of functional checks performed on the subassembly (12-16), and
the data can be verified with data expected by the processor (22) in order to check the completeness of the functional tests of the subassemblies (12-16).

12. The method of claim 11, furthermore comprising the step:
configuring and/or calibrating the operation of the electronic module (11) in dependence on the data.

## Revendications

1. Capteur de niveau, capteur de pression, détecteur de niveau ou capteur de température (10), comprenant :
un module électronique (11), qui comprend plusieurs composants électroniques (12 - 16) ;
un processeur (22), couplé électriquement aux composants électroniques (12, 16) ;
les composants (12 - 16) présentant chacun une mémoire programmable (17 - 21) avec des données spécifiques du composant respectif (12 - 16), dont le contenu de mémoire est lisible et évaluable par le processeur (22) ;
le processeur étant réalisé pour vérifier à l'aide des données, après le montage des composants, l'exactitude du montage de ces derniers ;
le processeur étant réalisé pour vérifier, à l'aide des données, si les composants respectifs ont été soumis à tous les tests prévus ;
les données comportant des informations sur le type des essais de fonctionnement réalisés sur le composant (12 - 16), et
les données étant vérifiables avec des données escomptées du processeur (22), pour contrôler l'intégralité des essais de fonctionnement des composants (12 - 16).

2. Capteur (10) selon la revendication 1,
les mémoires (17 - 21) étant des mémoires non volatiles, en particulier des EEPROMs sérielles avec une interface unifilaire.

3. Capteur (10) selon l'une des revendications précédentes,
les données comprenant un code d'identification pour la détermination du composant (12 - 16) et/ou de son fabricant.

4. Capteur (10) selon la revendication 3,
le code d'identification étant un numéro de série.

5. Capteur (10) selon l'une des revendications précédentes,
les données comportant des données de contrôle déterminées par essai de fonctionnement du composant (12 - 16).

6. Capteur (10) selon la revendication 5,
les données de contrôle comprenant des valeurs de mesure du composant (12 - 16), déterminées par essai.

7. Capteur (10) selon la revendication 5,
les données de contrôle comprenant des écarts de fabrication du composant (12 - 16), déterminés par essai.

8. Capteur (10) selon l'une des revendications précédentes,
le fonctionnement du module électronique (11) étant configurable en fonction des données.

9. Capteur (10) selon l'une des revendications précédentes,
le fonctionnement du module électronique (11) pouvant être étalonné en fonction des données.

10. Capteur (10) selon l'une des revendications précédentes,
un ou plusieurs éléments du groupe constitué de : un composant microondes (12), un composant d'interface (15), un composant de partage de réseau (14), un composant de détection (16) et un composant de contrôle de fréquence (13), étant prévus pour les composants (12 - 16).

11. Procédé de fabrication d'un capteur de niveau, capteur de pression, détecteur de niveau ou capteur de température (10), comprenant les étapes :
détermination (S100) de données spécifiques de plusieurs composants électroniques (12 - 16) ;
mémorisation (S101) des données spécifiques aux composants dans des mémoires respectives (17 - 21) des composants (12 - 16) ;
montage (S102) des composants (12 -16) dans un module électronique (11) ;
couplage électrique des composants électroniques (12 - 16) à un processeur (22) ;
lecture (S103) des données des mémoires (17 - 21) par le processeur (22), et
évaluation (S104) des contenus de mémoires (17 - 21) par le processeur (22) ;
vérification à l'aide des données de mémoires, après le montage des composants, de ce que le montage des composants est correct et/ou de ce que les composants respectifs ont été soumis à tous les tests prévus ;
les données comprenant des informations sur le type des essais de fonctionnement réalisés sur le composant (12 - 16), et
les données étant vérifiables avec des données escomptées du processeur (22), pour contrôler l'intégralité des essais de fonctionnement des composants (12 - 16).

12. Procédé selon la revendication 11, comprenant en outre l'étape :
configuration et/ou étalonnage du fonctionnement du module électronique (11) en fonction des données.
